# EUROPEAN PATENT APPLICATION

(11) **EP 1 047 211 A2**
(43) Date of publication of application: **25.10.2000**
(21) Application number: 00108753.5
(22) Date of filing: 25.04.2000
(51) Int. Cl.: H04B 7/195

(54) **Communication system with satellites at a high elevation angle**

(30) Priority: 24.04.1999 US 299117
(71) Applicant: Hughes Electronics Corporation, El Segundo, California 90245-0956 (US)
(72) Inventor: Wang, Arthur W., Buena Park, California 90620 (US)
(74) Representative: Lindner, Michael, Dipl.-Ing.

(57) **Abstract**

A communication system (40) has a ground station (54) for communicating communication signal to a plurality of satellites (14) located in an inclined elliptical orbit with respect to the earth (10). The satellites (14) operate in a region having a minimum elevation angle above the earth with respect to a service area. A receiving terminal (66) within the service area receives communication signals from a satellite (14).

## Description

### Technical Field

The present invention relates generally to satellite communications system and, more particularly, to a satellite system having satellites operating at high elevation angles as viewed from within a service area.

### Background of the Invention

Satellites in geostationary orbits (GSOs) have been widely preferred for several decades because of the economic advantages afforded by such orbits. In a geostationary orbit, a satellite traveling above the Earth's equator, in the same direction as that in which the Earth is rotating, and at the same angular velocity, appears stationary relative to a point on the Earth. These satellites are always "in view" at all locations within their service areas, so their utilization efficiency is effectively 100 percent. Antennas at Earth ground stations need be aimed at a GSO satellite only once; no tracking system is required.

Coordination between GSO's and with terrestrial services is facilitated by governmental allocation of designated "slots" angularly spaced according to service type. Given the desirability of geostationary satellite orbits and the fact that there are only a finite number of available "slots" in the geostationary "belt," the latter capacity has been essentially saturated with satellites operating in desirable frequency bands up through the Ku-band (up to 18 GHz). As a result, the government has been auctioning the increasingly scarce remaining slots.

This has encouraged the development of complex and expensive new systems including those using low Earth orbits (LEO's), medium Earth orbits (MEO's), and/or higher frequencies, for example, the Ka band (up to approximately 40 GHz). Growth to higher frequencies is limited by problems of technology and propagation, and expansion in satellite applications requires exploitation of the spatial dimension (i.e., above and below the GSO belt). A host of proposed LEO and MEO systems exemplify this direction. A drawback of LEO and MEO systems for users is the relative uncertainty of satellite position, and rapid motion, leading typically to the use of omnidirectional antennas having low gain, which limits data rate.

Highly elliptical orbits (HEO) such as the 12-hour "Molniya" long used by Russia, and the European Space Agency's 8-hour "Archimedes" have been used. HEO's disadvantages include a shorter fraction of service to a given area (fractionally geosynchronous period causes multiple nodes over the earth) and require specific 63° inclination (to minimize fuel requirements due to low perigee). LEO, MEO, and HEO systems require more satellites for coverage at a specified elevation angle to a single service area than does the present invention.

Another apparent drawback to the use of all inclined orbits is that of relative movement with respect to the ground. For wide bandwidths, two-dimensional tracking ground station antennas would be required. Tracking antennas are relatively expensive and thus are not considered for consumer applications.

In addition to HEO orbits, the use of inclined circular geosynchronous orbits for satellites has also been proposed. (See for example, the article by Isamu Chiba et. al, "Inclined GEO Satellite Communication System With Deployable Phased Array Antennas", AIAA-98-1254, Aeronautics and Astronautics, Inc., 1997, pp. 243-249.) Such systems have high elevation angles at a low latitude. However, in higher latitudes, the system has lower elevation angles which may not be suitable for certain systems.

While the various prior systems function relatively satisfactorily and efficiently, none discloses the advantages of a satellite system using overhead inclined, eccentric geosynchronous satellite orbits in accordance with the present invention as is hereinafter more fully described.

### Disclosure of the Invention

The present invention provides a satellite system that takes advantage of inclined eccentric geosynchronous orbits to provide relatively low cost satellite service particularly suitable for consumer markets.

The present invention also provides a satellite system with continuous coverage of the service area using a synchronized set of two or more satellites. The system can be configured to provide coverage at high elevation angles at high latitudes.

Recent developments in electronics, have improved satellite antenna technology to electronically track satellites. Thus, the present invention takes advantage of antennas that track electronically and thus have no moving parts. These antenna systems allow the incorporation of antennas into consumer products.

In one aspect of the invention, a communications system has a ground station for communicating communication signal to a plurality of satellites located in an inclined elliptical orbit with respect to the earth. The satellites operate in a region having a minimum elevation angle above the earth with respect to a service area. A receiving terminal within the service area receives communication signals from the satellite.

In a further aspect of the invention, a method of providing a system of inclined eccentric geosynchronous satellite orbits includes the steps of: defining at least one geographic service area within which satellite coverage is to be provided, said service area having a minimum elevation angle thereabove; defining at least two satellite orbits above the minimum service area having a first satellite and a second respectively therein; operating said first satellite; and handing over operation from the first satellite to the second satellite to maintain at least the minimum elevation angle by an operating satellite.

An advantage is that the satellite system provides continuous high elevation coverage that reduces blockage. High elevation coverage allows the use of the system in mobile applications. Another advantage of the present invention is that it allows the use of a conical-pattern upward-looking user antenna rather than a tracking antenna.

The present invention provides dedicated satellite coverage on a regional/local (for example, per city) basis, and, consequently, the configuration can be described as a 'local area' constellation. The constellation is customized for each region. Services that can be supported by the present invention include TV broadcasting (BSS band) and broadband data access (FSS band) for mobile/portable users.

The objects, advantages and features of the present invention are readily apparent from the following detailed description of the best mode for carrying out the invention when taken in connection with the accompanying drawings and appended claims.

### Brief Description of the Drawings

A more complete appreciation of the invention and many of the attendant advantages and features thereof may be readily obtained by reference to the following detailed description when considered with the accompanying drawings in which like reference characters indicate corresponding parts in all the views, wherein:
FIGURE 1 is a perspective view of an inclined elliptic geosynchronous orbit, an inclined geosynchronous orbit, and a geostationary (GSO) orbit with respect to the earth. The latter two orbits are for reference only.
FIGURE 2 is a perspective view of an alternative embodiment according to the present invention in which two IEGO orbit planes are established so that a phased pair of satellites will follow each other in a common ground or sky track.
FIGURE 3 is a perspective view of two service areas with respect to satellites together with a block diagram of system architect according to the present invention.
FIGURE 4 is a system elevational view of a satellite in an orbit according to the present invention and a GSO satellite.
FIGURE 5 is an elevational view of a person and automotive vehicle having satellite communications devices according to the present invention.
FIGURE 6 is a perspective view of a satellite for communications in a communications system according to the present invention.
FIGURE 7A is a perspective view of a patch antenna for use in the present invention.
FIGURE 7B is a cross-sectional view of the satellite patch of Figure 7A.
FIGURE 8 is an upward looking view of an operating arc of a satellite in a service area.
FIGURE 9 is an equirectangular projection map of satellite coverage for a service area, ground tracks for a service area, and elevational contours of an 80 degree elevation angle with respect to a service area.
FIGURE 10 is a plot of elevation angle in degrees versus hour of the day for a satellite system according to the present invention.

### Description of the Preferred Embodiment(s)

The present invention is illustrated herein in terms of a satellite orbit system using various inclination angles, eccentricity values and other values. It should be understood that specific numerical values are introduced as examples and not as final design values.

The essence of the invention is the establishment of a satellite communication system that employs satellites in high elevation orbits to allow mobile users, particularly in cities, to utilize the system. The satellite system has inclined, preferably geosynchronous orbits with repeating ground tracks.

In the present invention, (24 hour), inclined elliptic geosynchronous orbits (IEGO) satellites enable operation to provide high elevation angle service for a predetermined service region on a landmass with possible spectrum re-use for small service areas.

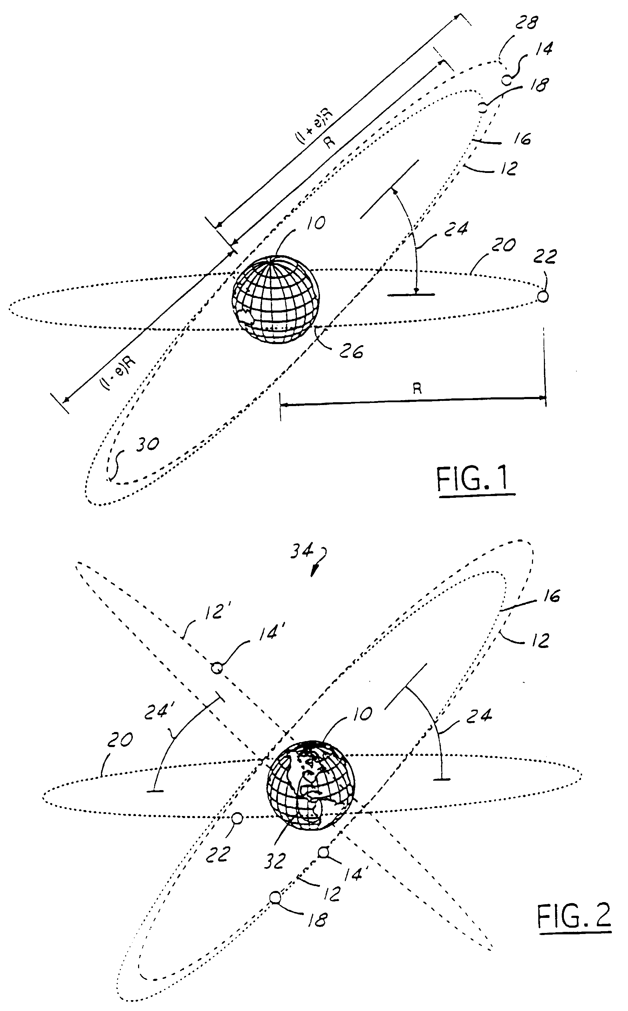

Referring now to Figure 1, Earth 10 is shown with an inclined eccentric geosynchronous orbit (IEGO) 12 that has an IEGO satellite 14. IEGO orbit 12 is shown in contrast to an inclined geosynchronous orbit (IGO) 16. IGO orbit 16 is an inclined circular orbit centered about the Earth 10. IGO orbit 16 has an IGO satellite 18 in a first position, which is used for reference. A geostationary (GSO) orbit 20 is also shown for contrast and has a GSO satellite 22. Each of the satellites 14, 18 and 22 follow their respective orbits 12, 16, 20 as they travel around Earth 10.

Figure 1 illustrates some general differences between a GSO, an IGO and an IEGO orbit. In this example, GSO orbit 20 has a radius R. GSO orbit 20 is defined on the equatorial plane of Earth 10. As Earth 10 rotates daily, GSO satellite 22 maintains a substantially constant position over the Earth. As seen from a point on the Earth, the elevation angle of the satellite is constant.

IGO orbit 16 also has a radius R that is the same as that of GSO orbit 20. IGO orbit 16 is disposed on a plane that has an inclination angle 24 with respect to the equatorial plane having GSO orbit 20. The plane defined by IGO orbit 16 and GSO orbit 20 intersect at a line of nodes 26 that extends through the center of Earth 10. IGO satellite 18 and GSO satellite 22 take one sidereal day (23 hours, 56 minutes) to complete an orbit. The elevation angle of an IGO orbit with respect to a point on the Earth depends on the position of IGO satellite 18 in its IGO orbit 16.

IEGO orbit 12 has an apogee 28 being set at the northernmost point of the orbit when viewed with respect to the Earth and an perigee 30 being the southernmost point of the orbit when viewed with respect to the Earth. IEGO in elliptical orbit 12 has a focus that is shifted from that of IGO orbit 16 so that apogee 28 is shifted in the direction of the northern hemisphere. Consequently, perigee 30 is shifted toward the southern hemisphere. Thus, the altitude of apogee 28 above the surface of the Earth is increased while the elevation of the perigee 30 is decreased. The major diameter of IEGO orbit 12 is 2R as in the case of an IGO orbit 16. IEGO orbit 12 is, however, shifted with respect to the center of IGO orbit 16 by an eccentricity factor e. Thus, the distance of the apogee 28 from line of nodes 26 is given by the formula (1 + e)R. The distance of perigee 30 from the line of nodes 26 is given by the formula (1 - e)R.

A ground track 32 on the surface of Earth 10 may be developed from IEGO satellite 14. Ground tracks are imaginary lines representing the loci of subsatellite points that are repeatedly traced on the surface of the Earth by lines extending from the center of the Earth to orbiting satellites. IEGO ground tracks are located at specified longitudes and retrace repeatedly each sidereal day (23 hr. 56 mm.).

The position of satellites 14, 18, 22 are shown about five hours later in Figure 2 from that shown in Figure 1. The Earth has thus rotated with respect to the orbits. Correspondingly, the elevation angle with respect to IGO satellite 18 and IEGO satellite 14 also changes.

Referring now to Figure 2, a second IEGO orbit 12' is shown having an IEGO satellite 14'. IEGO orbit 12' also has an inclination angle 24'. The inclination angle 24' and phasing are chosen so that the satellite placed in IEGO orbit 12' substantially traces the same ground track 32 as the satellite in IEGO orbit 12. The IEGO satellites 14, 14' are positioned so that as one satellite is leaving a service area, the other satellite is entering the service area. In this manner, continuous coverage may be provided to a particular service area.

Although not illustrated, the above example may be extended to three or more planes of IEGO orbits all synchronized so that continuous coverage may be provided to a service area within corresponding similar cones. More satellites may be required if a larger service area or a higher elevation angle within the service area is desired. By providing service at high elevation angles, applications in fixed satellite service, broadcast satellite service, or mobile satellite service may be more efficiently realized. Thus, a synchronized overhead IEGO system is generally indicated by reference numeral 34.

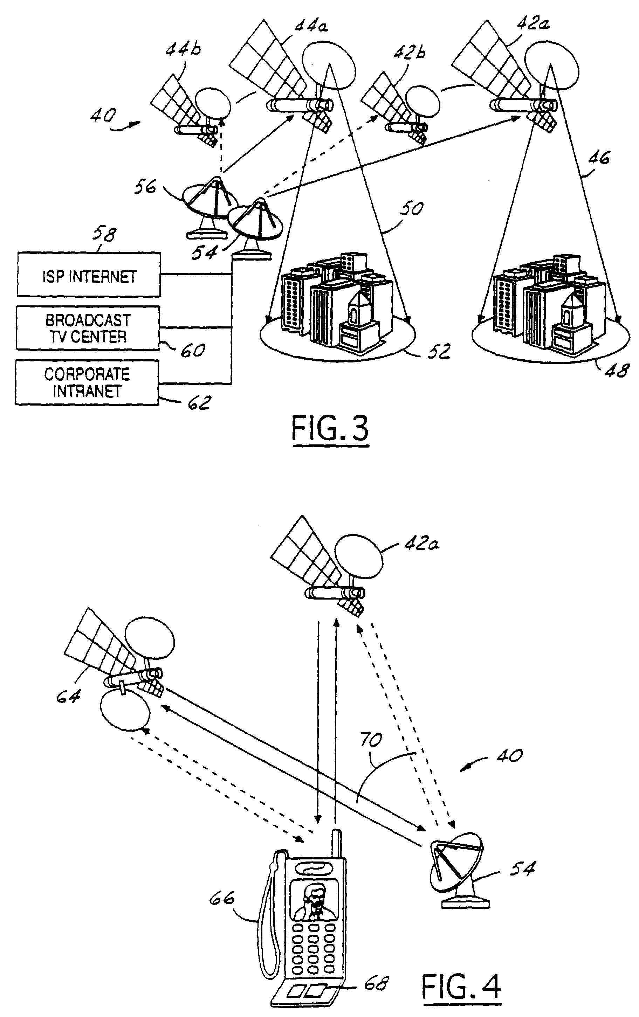

Referring now to Figure 3, a high level diagram of a communications system 40 is shown. Communications system 40 includes satellites 42a and 42b and satellites 44a and 44b. Satellites 42a, 42b are used to direct communications signals 46 to a service area 48. Satellites 44a, 44b are used to direct communications signals 50 to a service area 52. Communications signals 46, 50 may also be transmitted from service areas 48, 52 to satellites 44a, 44b, 42a, 42b.

Satellites 42a, 42b, and 44a, 44b, are preferably in an inclined eccentric geosynchronous orbit as described above. Although two satellites are illustrated for each service area, more than two satellites may be provided. Typically, only one satellite will provide coverage for a service area at a time. As illustrated, satellites 42a and 44a are providing coverage to service areas 48 and 52, respectively. The system is designed so that when the elevation angle of satellites 42a and 44a become low, satellites 42b and 44b are at a proper elevation angle. A handover occurs and satellites 42b, 44b provide communication signals 46 and 50, respectively.

Communications system 40 is illustrated with ground stations 54 and 56. Ground stations 54 and 56 may be coupled to the terrestrial infrastructure such as an internet service provider 58, a broadcast TV center 60, or a corporate intranet 62. Of course, other terrestrial type communications may also be coupled to communications system 40 such as telephone networks or cellular telephone networks. One skilled in the art would recognize that ground stations 54 and 56 may be incorporated into a single centralized ground station or single location to provide common content and information for interactive data communications. The gateway can reuse the same frequency band if it is not inside the service region. Only one gateway is need for the whole of the CONUS region although more can be used if desired.

Referring now to Figure 4, a portion of communications system 40 having ground station 54 and satellite 42a are illustrated with respect to a GSO satellite 64. A mobile terminal 66 that is part of communications system 40 is also illustrated. Mobile terminal 66 has a patch antenna 68 for communicating with satellite 42a. The elevation angle is preferably greater than 70°. As illustrated, satellite 42a has an elevation angle greater than 80°. Also, as illustrated, a GSO satellite 64 has an elevation angle less than 50°. Thus, the separation angle 70 between GSO satellite 64 and satellite 42a is at a minimum 30°. Thus, satellite 42a and GSO satellite 64 can potentially share frequency spectrum even if patch antenna 68 is an omnidirectional antenna. There may, however, be some minimum constraints on the location such as minimum latitude of metropolitan areas for use of a communications system according to the present invention if frequencies are shared with GSO satellites. Assuming K-band is used, and assuming that the required C/I ratio for both systems is 15 dB and the pfd variance is 15 dB, then a GSO antenna having a size of 66 cm. can provide 30 dB discrimination at about 30° and can thus support both GSO and a system according to the present invention. Typically, omnidirectional antennas have been used only in the L-band where there are no frequency reuse constraints. A key aspect of the present invention, however, is that it makes it possible to use an omnidirectional antenna operating in a frequency spectrum mainly used by existing GSO systems.

The communication system may employ a GSO satellite in addition to satellites 44a, 44b, 42a, 42b. The use of a GSO satellite depends on the overall use of the system as would be evident to those in the art.

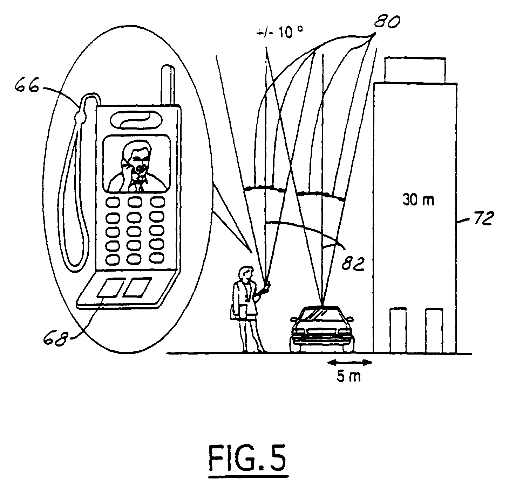

Referring now to Figure 5, one advantage of the present invention is illustrated. In particular, the present invention, due to its high elevation angle, provides the capability of use within cities having tall buildings 72. As illustrated, a person 74 and an automotive vehicle 76 are equipped with a mobile terminal for communication with a satellite. Person 74, for example, may be carrying a mobile terminal 66 as described above. In cities and metropolitan areas, tall buildings may degrade the signal due to blockage of the signal. A suitable minimum elevation angle may be about 80°. At a minimum elevation angle of 80°, if person 74 or automotive vehicle 76 is only five meters from building 72 having a height of 30 meters, a clear view of a satellite within an 80° minimum angle may be obtained. That is, by providing angles 80 within +/- 10° from Azimuth 82, a clear view of the satellite is obtained.

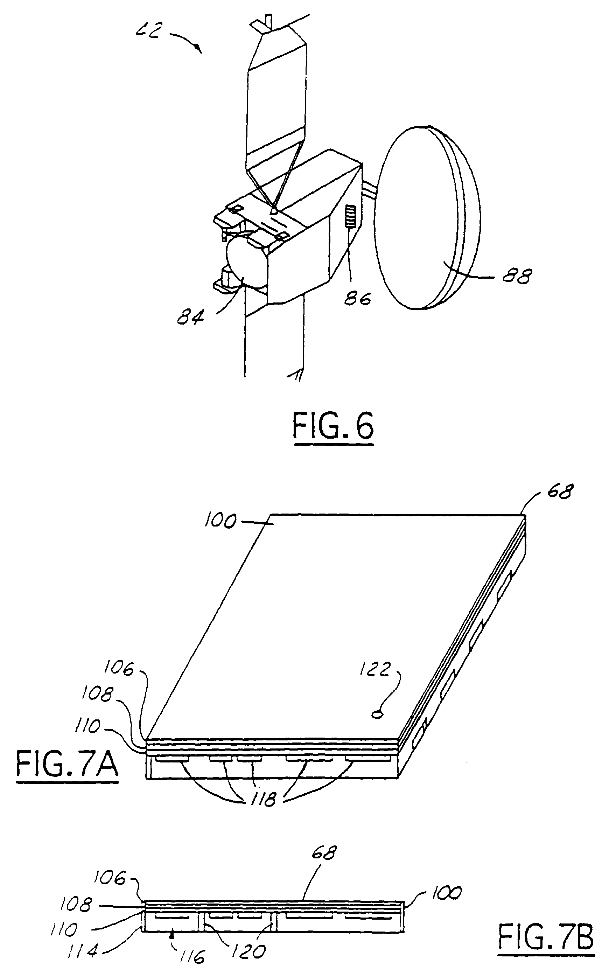

Referring now to Figure 6, a suitable satellite 42a for implementation within communication system 40 is shown. A suitable satellite may, for example, have a feeder link antenna 84, a feed cluster 86, and a communication link antenna 88. Feed cluster 86 is used to transmit signals to communication link antenna 88, which reflects the signals to the ground. Feeder link antenna receives communications from the ground.

Referring now to Figures 7A and 7B, an element module 100 patch antenna 68 is shown. Functionally, element modules will convert microwave energy into digital streams in a receiving mode, and vice versa in transmit mode. Structurally, element modules function as light bulbs in optical illumination providing more antenna gain with more modules in the array. Coherent addition functions are provided, not at the element level but at the "back plate" in digital format.

Element module 100 has a radiating patch 106 which is coupled onto a dielectric layer 108. Dielectric layer 108 is coupled to a ground plane 110. Ground plane 110 is preferably sized about the same or slightly larger than radiating patch 106. Radiating patch 106, dielectric layer 108, and ground plane 110 generally form a microstrip antenna. Dielectric layer 108 generally is coupled to a housing 114. Housing 114 extends from dielectric layer 108 to form a cavity 116 therein. Element module circuit chips 118 are coupled to ground plane 110 within cavity 116.

A plurality of interconnections 120 may be used to couple element circuit chips 118 to the appropriate circuit traces on multilayer logic network 104. Interconnections 120 may, for example, be a spring connector or other suitable connection. The connections may be hardwired but if the module is to be easily disassembled, then spring connectors may be preferred. Both logic connections and power and ground connections may be made through interconnections 120.

A feed 122 may be formed in radiating patch 106. Feed 122 is an opening in radiating patch 106. Feed 122 is used to interconnect RF signals from an amplifier to patch 106.

Patch antenna 68 is designed to minimize the amount of microwave and RF circuitry by converting incoming signals to digital signals as early as possible in the circuitry chain. Digital beam forming is employed to electronically steer the beam at base band. As will be further described below, the processing functions such as digital beam forming, filtering, and tracking are interleaved in performance to minimize digital loading.

Orbital parameters are chosen to realize certain ground track shapes. Consideration is given to specified constraints on the service region, service area coverage, and coverage time.

As would be evident to those skilled in the art, a mast antenna may also be used to provide an omnidirectional antenna on mobile terminal. A mast antenna would be suitable for use in an automotive vehicle 76.

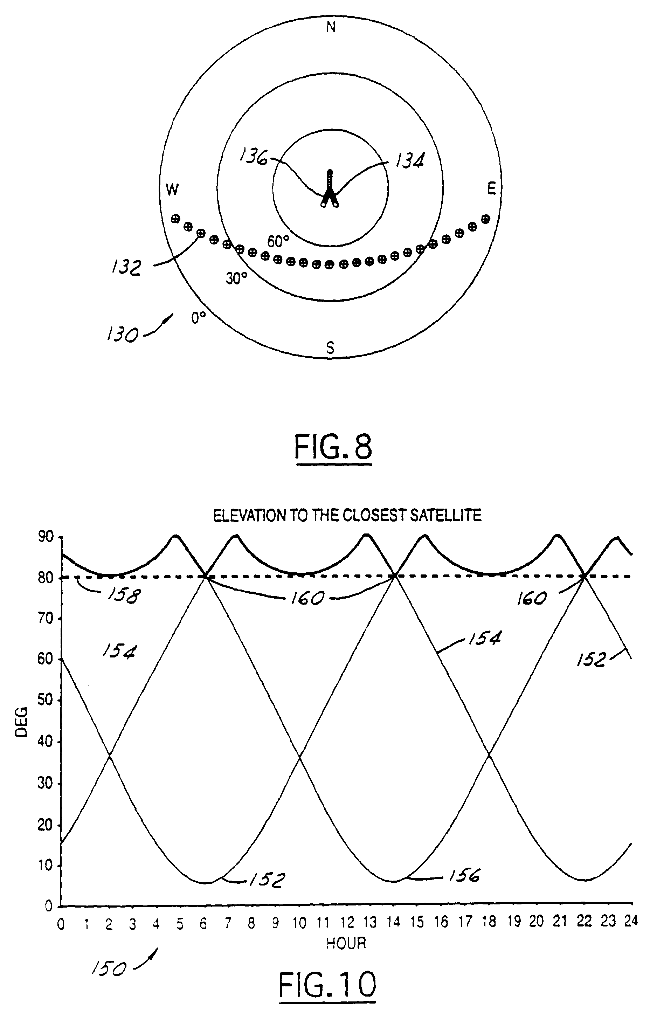

Referring now to Figure 8, a skyward-looking plot 130 is illustrated for the service area of the City of Los Angeles. A line 132 represents the position of GSO satellites. The center 134 of plot 130 represents the Azimuth above Los Angeles. A satellite arc 136 represents the arc through which satellite traverses above service area during operation. The minimum elevation angle of a satellite arc 136 is about 80.6º.

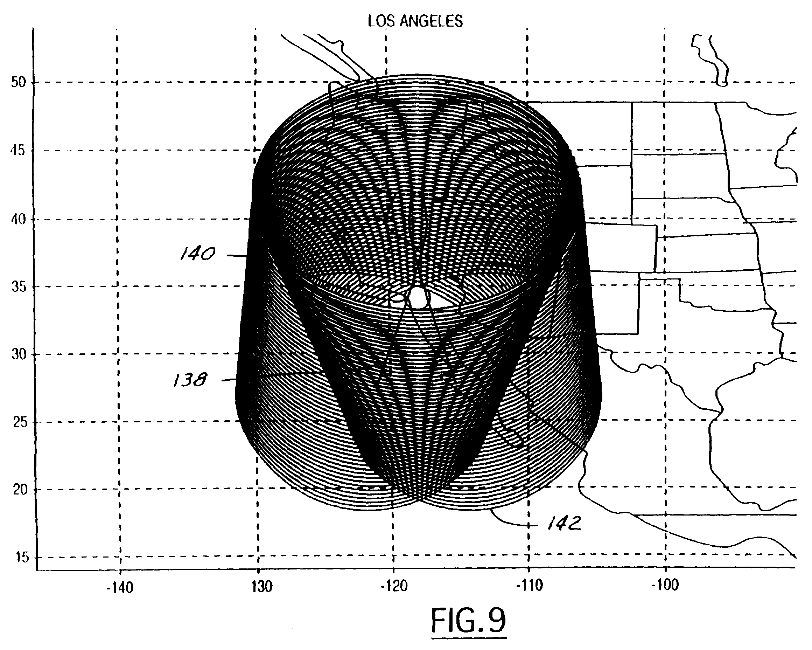

Referring now to Figure 9, a ground track 138 of satellite arc 136 is projected upon the ground. Ground track 138 is shown with respect to a spot beam 140 that represents the service area. An exemplary beam coverage area might be on the order of 200 km (diameter) for coverage of Los Angeles and Orange Counties (or Tokyo and Yokohama) with an 80° elevation boundary within an eight hour period. In the present example, Los Angeles and the Orange County area are within the service area. The contour plot 142 illustrates the elevational contours of the operational area of a satellite on satellite arc 136 of Figure 8.

Referring now to Figure 10, a plot 150 of the elevation angle of satellites within a service area in degrees versus the time of day in hours is illustrated. In the present example, an elevation angle of 80° is a design parameter. In this case, a plot for a first satellite is illustrated by line 152. A plot for a second satellite is illustrated by line 154, and a plot for a third satellite is illustrated by line 156. The area of operation for each satellite is above the horizontal line 158 at an elevation angle of about 80 degrees. Handover points 160 represent the time in which operation is transferred between the three satellites.

In operation, of a system according to the present invention, various numbers of satellites may be used. In Figure 10, a three satellite system providing 24-hour coverage is illustrated. If one satellite illustrated by line 158 is eliminated, 16-hour service may be achieved with elevation higher than 80 degrees or 18 hour service with elevation higher than about 75 degrees. This may be suitable for communications systems serving businesses. In this manner, the system may be customized for cities based upon need. Cities within the same continent may reuse the same frequencies. Cities close to each other, for example, Los Angeles and San Francisco or London and Paris can reuse spectrum easily. For customization, inclined elliptical geosynchronous orbit with a maximum altitude around 40,000 km can be preferably used. Due to the high elevation angles used, the longest propagation delay will be no worse than would be present in a GSO system. The present invention primarily provides land coverage. Therefore, the satellite usage efficiency of the present invention will be much higher than most LEO systems operating over oceans although lower than GSO systems.

One system envisioned, according to the present invention, may be suitable for latitude greater than 30º. The angle of inclination with respect to the equatorial plane is 41.3º. The eccentricity is 0.13. With these design parameters, the altitude at perigee would be 30305 km and at apogee 41258 km. Thus, insignificant delays compared to GS0 satellite may be achieved.

While the invention has been described in detail, those familiar with the art to which this invention relates will recognize various alternative designs and embodiments for practicing the invention as defined by the following claims.

## Claims

1. A communications system (40) comprising:
a ground station (54, 56);
a plurality of satellites (14; 42, 44) located in an inclined elliptical orbit (12) with respect to the earth (10), said satellites operating in a region having a minimum elevation angle above the earth with respect to a service area (48; 52); and
a receiving terminal (66) within the service area receiving communication signals from the satellite (14; 42, 44).

2. The system of claim 1, characterized in that said minimum elevation angle is greater than about 70 degrees.

3. The system of claim 1, characterized in that said minimum elevation angle is greater than about 80 degrees.

4. The system of any of claims 1-3, characterized in that said receiving terminal (66) is a hand held terminal (66).

5. The system of any of claims 1-3, characterized in that said receiving terminal is in an automotive vehicle (76).

6. A satellite communications system characterized by:
a first plurality of satellites (14; 42) operating with a minimum elevation angle over a first service area (48);
a second plurality at satellites (14; 44) operating with a second minimum elevation angle over a second service area (52);
a ground station (54) communicating with said first plurality of satellites (14; 42) and said second plurality of satellites (14; 44); and
a first receiving terminal (66) within said first service area receiving signals from said ground station (54) through said first plurality of satellites (14; 42); and
a second receiving terminal (66) within said second service area receiving signals from said ground station through said second plurality of satellites (14; 44).

7. The satellite communications system of claim 6, characterized by:
a first mobile terminal (66) within the first service area in communication with one of the first plurality of satellites (14; 42).

8. The satellite communications system of claim 6 or 7, characterized by:
a second mobile terminal (66) within the second service area in communication with one of the second plurality of satellites (14).

9. The satellite communications system of any of claims 6-8, characterized in that
said minimum elevation angle is at a minimum greater than about 70 degrees.

10. The satellite communications system of any of claims 6-8, characterized in that said minimum elevation angle is greater than about 80 degrees.
